# EUROPEAN PATENT SPECIFICATION

(11) **EP 1 383 984 B1**
(45) Date of publication and mention of the grant of the patent: **16.02.2005**
(21) Application number: 01954924.5
(22) Date of filing: 24.07.2001
(51) Int. Cl.: E21B 41/00, H01M 6/26

(54) **DOWNHOLE ELECTRICAL POWER SYSTEM**
SYSTEM ZUR STROMVERSORGUNG IN EINEM BOHRLOCH
SYSTEME D'ALIMENTATION ELECTRIQUE POUR TROU DE FORAGE

(43) Date of publication of application: 28.01.2004
(73) Proprietor: Halliburton Energy Services, Inc., Carrollton, TX 75006 (US)
(72) Inventor: SCHULTZ, Roger, L., Aubrey, TX 76227 (US); WATSON, Brock, Carrolton, TX 75006 (US); FRIPP, Michael, L., Dallas, TX 75287 (US); CASSIDY, Juanita, M., Duncan, OK 73533 (US)
(74) Representative: Curtis, Philip Anthony
(86) International application number: PCT/US2001/023280
(87) International publication number: WO 2003/010413

(56) References cited:
- WO-A-01/40620
- WO-A-01/89014
- US-A- 2 654 960
- US-A- 3 876 471
- US-A- 4 532 614
- US-B1- 6 253 847

## Description

The present invention relates generally to equipment utilized in conjunction with subterranean wells and, in an embodiment described herein, more particularly provides a downhole electrical power system.

There are many uses for a downhole electrical power system. These uses include providing power to operate well tools, such as sensors, data storage devices, flow control devices, transmitters, receivers, etc.

Unfortunately, the downhole environment is frequently inhospitable to some types of power systems. For example, batteries typically cannot withstand wellbore temperatures for long.

Other types of power systems generate electrical power from fluid flow in a well. For example, turbines have been used to drive generators in order to produce electrical power downhole. However, these power systems cannot provide electrical power when the fluid flow ceases.

Therefore, it may be seen that a need exists for an improved downhole electrical power system. Preferably, the improved downhole electrical power system will be able to withstand the downhole environment and will not rely on fluid flow to generate its electrical power, contrary to the disclosure of doc US. 3 876 471 where the drilling mut is used as an electrolyte.

The present invention provides a downhole electrical power system as defined in the appended independent claim 1. A downhole electrical power system comprising further novel and advantageous features is defined in any of the appended dependent claims 2 to 21.

In carrying out the principles of the present invention, a downhole electrical power system is described hereinafter which satisfies the above need in the art. The power system utilizes a voltaic cell to provide electrical power to a well tool downhole.

A downhole electrical power system is described below which includes an electrical power-consuming well tool interconnected in a tubular string. A power source provides the well tool with electrical power and includes at least one voltaic cell. The voltaic cell has an electrolyte which may be isolated from well fluid, or the electrolyte may be well fluid.

A first barrier, such as a floating piston, may be used to isolate the electrolyte from the well fluid. An insulating fluid may be disposed between the well fluid and the electrolyte, and another barrier may be used to isolate the insulating fluid from the electrolyte. One or both of these barriers may be permeable to hydrogen gas generated in the voltaic cell. The barriers may transmit fluid pressure, so that the electrolyte is at substantially the same pressure as the well fluid.

These and other features, advantages, benefits and objects of the present invention will become apparent to one of ordinary skill in the art upon careful consideration of the representative embodiment of the invention described hereinbelow with reference to the accompanying drawings, in which:
FIG. 1 is a schematic view of a downhole electrical power system embodying principles of the present invention; and
FIG. 2 is a schematic cross-sectional view of an electrical power source of the power system of FIG. 1.

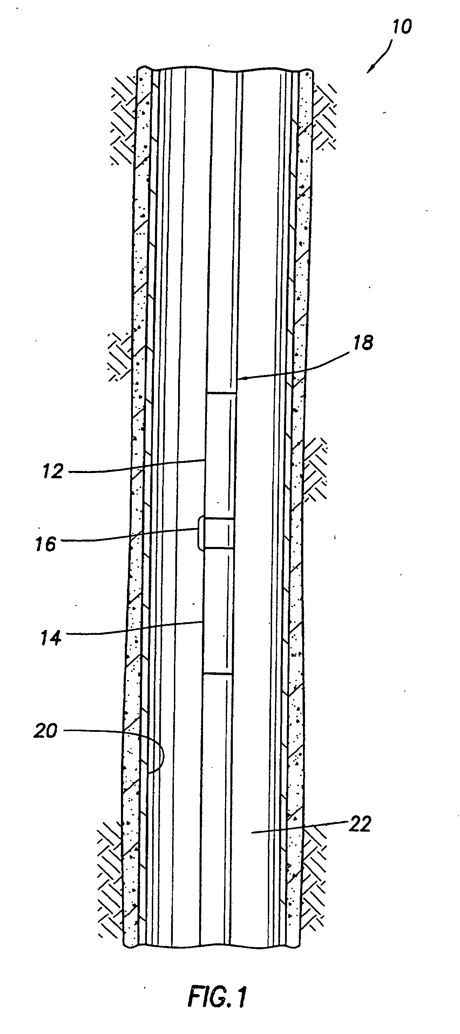

Representatively illustrated in FIG. 1 is a downhole electrical power system 10 which embodies principles of the present invention. In the following description of the power system 10 and other apparatus and methods described herein, directional terms, such as "above", "below", "upper", "lower", etc., are used only for convenience in referring to the accompanying drawings. Additionally, it is to be understood that the various embodiments of the present invention described herein may be utilized in various orientations, such as inclined, inverted, horizontal, vertical, etc., and in various configurations, without departing from the principles of the present invention.

The power system 10 includes an electrical power source 12 and an electrical power-consuming well tool 14. The power source 12 provides electrical power to operate the well tool 14. As depicted in FIG. 1, an external set of conductors 16 are used to conduct electrical power from the power source 12 to the well tool 14, but these conductors could extend internally, or the power source could be connected directly to the well tool, etc.

The well tool 14 could be any type of power-consuming downhole device. For example, the well tool 14 could be a flow control device (such as a valve), a sensor (such as a pressure, temperature or fluid flow sensor), an actuator (such as a solenoid), a data storage device (such as a programmable memory), a communication device (such as a transmitter or a receiver), etc. The power source 12 may also be used to charge a battery or a capacitor, in which case the energy storage device would be the well tool 14.

The well tool 14 and power source 12 are interconnected in, and form a part of, a tubular string 18 positioned in a wellbore 20. An annulus 22 is formed between the tubular string 18 and the wellbore 20. The tubular string 18 may, for example, be a conventional production tubing string having an internal flow passage for production of hydrocarbons from the well, or it could be used for injecting fluid into a subterranean formation through the flow passage, etc.

Note that the power source 12 is depicted in FIG. 1 as being separate and spaced apart from the well tool 14. However, it is to be clearly understood that this is not necessary in keeping with the principles of the present invention. The power source 12 and well tool 14 could be directly connected to each other, they could be combined into the same tool, they could be integrated into another overall tool assembly, etc.

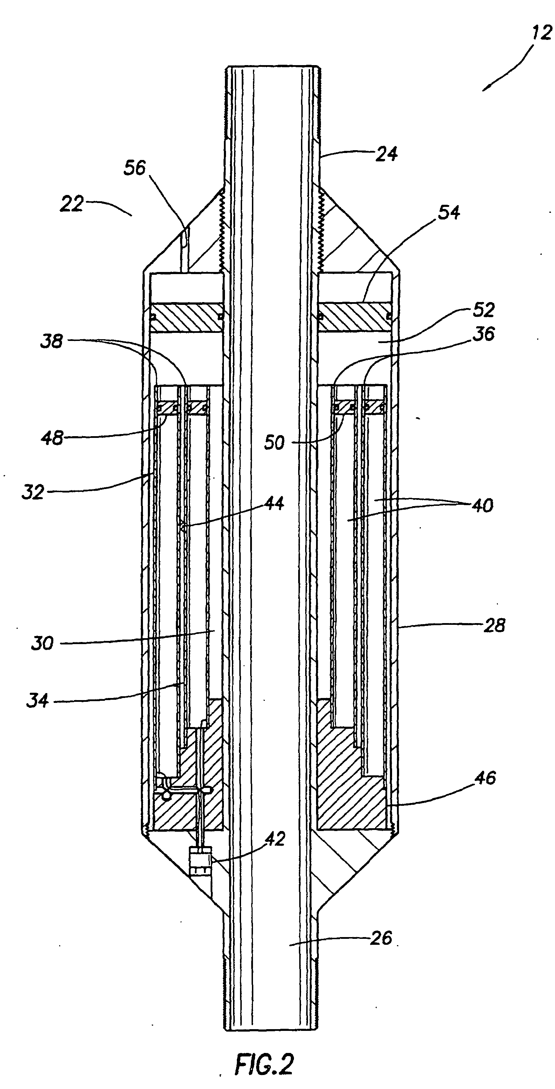

Referring additionally now to FIG. 2, an enlarged cross-sectional view of the power source 12 is representatively illustrated. The power source 12 includes a generally tubular inner housing 24 having a flow passage 26 formed therethrough. The inner housing 24 is threaded at each end for interconnection in the tubular string 18, so that the flow passage 26 communicates with the interior flow passage of the tubular string.

A generally tubular outer housing 28 outwardly surrounds the inner housing 24, thereby forming an annular chamber 30 therebetween. Two voltaic cells 32, 34 are positioned within the chamber 30. The cells 32, 34 are generally annular-shaped, with the outer cell outwardly surrounding the inner cell, and the inner cell outwardly surrounding the flow passage 26. However, it is to be clearly understood that the cells 32, 34 could be otherwise shaped and otherwise positioned, without departing from the principles of the present invention.

Each of the cells 32, 34 includes an annular-shaped anode 36 and an annular-shaped cathode 38. An electrolytic fluid 40 is contained between the anode 36 and cathode 38 of each of the cells 32, 34. Preferably, the anodes 36 are made of a magnesium material, the cathodes 38 are made of a copper or steel material, and the electrolyte 40 is a sodium chloride and water solution. However, other materials may be used. For example, the anodes 36 may comprise an alloy of magnesium and zinc, the cathodes 38 may comprise a silver material or an alloy, and the electrolyte 40 may be another aqueous solution or suspension, such as another salt solution, fresh water, use of a clay backfill, etc.

Using the preferred materials for the anodes 36, cathodes 38 and electrolyte 40, each of the cells 32, 34 should produce approximately 0.7 volts. The cells 32, 34 may be electrically connected in series to produce 1.4 volts (i.e., by connecting the anode 36 of one of the cells to the cathode 38 of the other cell).

As depicted in FIG. 2, one of the anodes 36 and one of the cathodes 38 are connected to a connector 42 for conducting electrical power to the well tool 14 via the conductors 16 described above. The other anode 36 and cathode 38 are connected to each other using a conductor 44, so that the cells 32, 34 are wired in series. Of course, the cells 32, 34 could be wired in parallel, could be connected to separate well tools, or could be connected in any other manner, without departing from the principles of the present invention.

The anodes 36 and cathodes 38 are secured in the chamber 30 by an insulator 46, which also prevents escape of the electrolyte 40 from between the respective anodes and cathodes at the lower ends of the cells 32, 34. If the inner and/or outer housings 24, 28 are made of a nonconducting material, the insulator 46 may be unnecessary. However, electrical communication between the electrolyte 40 in the cells 32, 34 should be prevented.

Escape of the electrolyte 40 from the upper ends of the cells 32, 34 is prevented by annular-shaped electrically insulative floating pistons 48, 50. The pistons 48, 50 permit pressure transfer between the electrolyte 40 and an insulating fluid 52 in the chamber 30 surrounding the cells 32, 34. The fluid 52 may be any type of insulating fluid, such as silicone, etc.

In each of the voltaic cells 32, 34, hydrogen gas is generated at the cathode 38 due to the chemical reaction which produces electricity in the cell. The pistons 48, 50 are made of a material, such as Teflon® or an elastomer, which is gas-permeable, or at least permeable to hydrogen gas. In this way, the hydrogen gas is permitted to escape from the cells 32, 34, rather than accumulate therein.

However, it is to be understood that it is not necessary in keeping with the principles of the present invention for hydrogen gas to be generated at the cathode 38. For example, the salt CuSO₄ could be reduced at the cathode 38 (Cu⁺² + 2e⁻ → Cu^{o}) with no production of hydrogen gas.

Note that the pistons 48, 50 may be some other type of barrier. For example, the pistons 48, 50 could instead be membranes which flex to transmit pressure thereacross, and which are also made of a gas-permeable material to permit escape of the hydrogen gas from the cells 32, 34. Thus, any type of barrier may be used, without departing from the principles of the present invention.

The insulating fluid 52 is isolated from well fluid in the annulus 22 by an annular-shaped floating piston 54 positioned in the chamber 30. The piston 54 transmits pressure between the well fluid in the annulus 22 and the insulating fluid 52 in the chamber 30. In this way, the insulating fluid 52 and electrolytes 40 (via the floating pistons 48, 50) are at substantially the same pressure as the well fluid in the annulus 22, so that the outer housing 28 is pressure balanced.

Of course, as with the pistons 48, 50 described above, any type of barrier may be used in place of the piston 54. For example, a flexible membrane may be used to isolate the well fluid from the insulating fluid 52 while permitting pressure transmission therebetween. The piston 54 may also be hydrogen gas-permeable.

Pressure in the well fluid in the annulus 22 is communicated to the chamber 30 via an opening 56 formed through the outer housing 28. However, it is to be understood that the chamber 30 could be pressurized from the flow passage 26. That is, the opening 56 could provide fluid communication between the chamber 30 and the flow passage 26, instead of between the chamber and the annulus 22, in which case the insulating fluid 52 and electrolytes 40 would be at substantially the same pressure as the well fluid in the flow passage 26. In that case, the inner housing 24 would be pressure balanced opposite the chamber 30.

It should be clearly understood that it is not necessary for either of the inner and outer housings 24, 28 to be pressure balanced, or for the insulating fluid 52 and electrolytes 40 to be at substantially the same pressure as well fluid proximate the power source 12. The chamber 30 could instead be completely sealed from the well fluid pressure. For example, the chamber 30 could be at a reduced pressure relative to the well fluid pressure.

In an alternate embodiment of the power source 12, the well fluid in the annulus 22 or flow passage 26 could serve as the electrolyte 40. For example, brine water is commonly used as a well fluid. Brine water is a salt solution and would function as the electrolyte 40.

If well fluid in the annulus 22 is used as the electrolyte 40, then the opening 56 would extend between the annulus and the chamber 30 as shown in FIG. 2. If well fluid in the flow passage 26 is used as the electrolyte 40, then the opening would instead extend between the flow passage and the chamber 30. In either case, the floating pistons 54, 48, 50 would not be used to isolate the well fluid from the electrolyte 40.

Of course, a person skilled in the art will readily appreciate that the present invention is not limited to the specific embodiments described above. Accordingly, the foregoing detailed description is to be clearly understood as being given by way of illustration and example only.

## Claims

1. A downhole electrical power system (10), comprising: an electrical power-consuming well tool (14) interconnected in a tubular string (18); and a power source (12) providing the well tool (14) with electrical power, the power source (12) including at least one voltaic cell (32, 34) having an anode (36) and a cathode (38), each of the anode (36) and cathode (38) being exposed to an electrolyte (40), and **characterised in** the electrolyte (40) is isolated from the well fluid proximate the power source (12) by at least one pressure transmitting fluid barrier (48,50,52,54).

2. A downhole electrical power system according to claim 1, wherein the electrolyte (40) is a salt solution.

3. A downhole electrical power system according to claim 1 or 2, wherein the cathode (38) comprises a material which is a selected from one of copper and silver.

4. A downhole electrical power system according to any of the preceding claims, wherein the anode (36) comprises a material which is a selected from one of aluminium and an alloy of zinc and magnesium.

5. A downhole electrical power system as claimed in any of the preceding claims, wherein the or each barrier is gas-permeable.

6. A downhole electrical power system according to claim 5, wherein the gas-permeable barrier is permeable to hydrogen gas.

7. A downhole electrical power system according to any of the preceding claims, wherein the or each fluid barrier comprises fluid (52), and first (54) and second (48,50) barrier elements between which said barrier fluid (52) is disposed.

8. A downhole electrical power system according to claim 7, wherein the first barrier element (54) isolates the well fluid from said barrier fluid (52), and the second barrier element (48,50) isolates the electrolyte (40) from said barrier fluid (52).

9. A downhole electrical power system according to claim 8, wherein the second barrier element (48,50) is electrically insulative.

10. A downhole electrical power system according to any of claims 7 to 9, wherein the second barrier element (48,50) permits pressure transfer between the barrier fluid (52) and the electrolyte (40).

11. A downhole electrical power system according to any of claims 7 to 10, wherein the first barrier element (54) permits pressure transfer between the barrier fluid (52) and the well fluid.

12. A downhole electrical power system according to any of claims 7 to 11, wherein the first barrier element (54) comprises a floating piston.

13. A downhole electrical power system according to any of claims 7 to 12, wherein the second barrier element (48,50) comprises a floating piston.

14. A downhole electrical power system according to any of claims 7 to 13, wherein the barrier fluid (52) is electrically insulating.

15. A downhole electrical power system according to any of the preceding claims, wherein the fluid barrier is movable so as to maintain the electrolyte (40) at a pressure substantially equal to well fluid pressure proximate the power system.

16. A downhole electrical power system according to any of the preceding claims, comprising multiple ones of the voltaic cells (32,34), the voltaic cells being electrically connected to each other.

17. A downhole electrical power system according to claim 16, wherein the voltaic cells (32,34) are connected in series.

18. A downhole electrical power system according to claim 16 or 17, wherein a first one (34) of the voltaic cells is positioned within a second one (32) of the voltaic cells.

19. A downhole electrical power system according to claim 18, wherein the second voltaic cell (32) is annular-shaped and surrounds the first voltaic cell (34).

20. A downhole electrical power system according to claim 18 or 19, wherein the first voltaic cell (34) is annular-shaped and surrounds the flow passage.

21. A downhole electrical power system according to any of the preceding claims, further comprising: an inner housing (24) having a flow passage (26) formed therethrough, the inner housing (24) being interconnected to the tubular string (18); so that the flow passage (26) is in communication with the interior of the tubular string (18); and an outer housing (28) at least partially spaced apart from the inner housing (24) so that a chamber is formed therebetween in which the or each voltaic cell (32,34) is disposed.

## Patentansprüche

1. Ein elektrisches Tieflochstromnetz (10), umfassend: ein elektrisches, stromverbrauchendes Bohrlochwerkzeug (14), innerhalb einer Rohranordnung (18) angeschlossen; und eine Stromquelle (12), welche das Bohrlochwerkzeug (14) mit elektrischem Strom speist, wobei die Stromquelle (12) einschließlich mindestens einer Voltaschen Zelle (32, 34) mit einer Anode (36) und einer Kathode (38) ausgestattet ist, wobei eine jede der Anode (36) und der Kathode (38) einem Elektrolyt (40) ausgesetzt sind, und **dadurch gekennzeichnet, dass** das Elektrolyt (40) in der Nähe der Stromquelle (12) durch mindestens eine druckübertragende Flüssigkeitssperre (48, 50, 52, 54) von der Bohrlochflüssigkeit isoliert ist.

2. Ein elektrisches Tieflochstromnetz nach Anspruch 1, bei welchem das Elektrolyt (40) aus einer Salzlösung besteht.

3. Ein elektrisches Tieflochstromnetz nach Anspruch 1 oder 2, bei welchem die Kathode (38) ein Material umfasst, welches von entweder Kupfer oder Silber ausgewählt wird.

4. Ein elektrisches Tieflochstromnetz nach einem der vorhergehenden Ansprüche, bei welchem die Anode (36) ein Material umfasst, welches entweder von Aluminium oder einer Zink- und Magnesiumlegierung ausgewählt wird.

5. Ein elektrisches Tieflochstromnetz nach einem der vorhergehenden Ansprüche, bei welchem die oder jede Sperre gasdurchlässig ist.

6. Ein elektrisches Tieflochstromnetz nach Anspruch 5, bei welchem die gasdurchlässige Sperre gegenüber von Wasserstoffgas durchlässig ist.

7. Ein elektrisches Tieflochstromnetz nach einem der vorhergehenden Ansprüche, bei welchem die oder jede Flüssigkeitssperre Flüssigkeit (52) und erste (54) und zweite (48, 50) Sperrelemente umfasst, zwischen welchen die vorgenannte Sperrflüssigkeit (52) positioniert ist.

8. Ein elektrisches Tieflochstromnetz nach Anspruch 7, bei welchem das erste Sperrelement (54) die Bohrlochflüssigkeit von der vorgenannten Sperrflüssigkeit (52) isoliert, und bei welchem das zweite Sperrelement (48, 50) das Elektrolyt (40) von der vorgenannten Sperrflüssigkeit (52) isoliert.

9. Ein elektrisches Tieflochstromnetz nach Anspruch 8, bei welchem das zweite Sperrelement (48,50) elektrisch isolierend ist.

10. Ein elektrisches Tieflochstromnetz nach einem der Ansprüche 7 bis 9, bei welchem das zweite Sperrelement (48, 50) eine Druckübertragung zwischen der Sperrflüssigkeit (52) und dem Elektrolyt (40) ermöglicht.

11. Ein elektrisches Tieflochstromnetz nach einem der Ansprüche 7 bis 10, bei welchem das erste Sperrelement (54) eine Druckübertragung zwischen der Sperrflüssigkeit (52) und der Bohrlochflüssigkeit ermöglicht.

12. Ein elektrisches Tieflochstromnetz nach einem der Ansprüche 7 bis 11, bei welchem das erste Sperrelement (54) einen Schwimmkolben umfasst.

13. Ein elektrisches Tieflochstromnetz nach einem der Ansprüche 7 bis 12, bei welchem das zweite Sperrelement (48, 50) einen Schwimmkolben umfasst.

14. Ein elektrisches Tieflochstromnetz nach einem der Ansprüche 7 bis 13, bei welchem die Sperrflüssigkeit (52) elektrisch isolierend ist.

15. Ein elektrisches Tieflochstromnetz nach einem der vorhergehenden Ansprüche, bei welchem die Sperrflüssigkeit bewegbar ist, so dass das Elektrolyt (40) auf einem Druck gehalten werden kann, welcher im wesentlichen dem Druck der Bohrlochflüssigkeit in der Nähe des Stromnetzes gleicht.

16. Ein elektrisches Tieflochstromnetz nach einem der vorhergehenden Ansprüche, welches mehrere der Voltaschen Zellen (32, 34) umfasst, wobei dieselben Voltaschen Zellen elektrisch miteinander verbunden sind.

17. Ein elektrisches Tieflochstromnetz nach Anspruch 16, bei welchem die Voltaschen Zellen (32, 34) hintereinander geschaltet sind.

18. Ein elektrisches Tieflochstromnetz nach Anspruch 16 oder 17, bei welchem eine erste (34) der Voltaschen Zellen innerhalb einer zweiten (32) der Voltaschen Zellen positioniert ist.

19. Ein elektrisches Tieflochstromnetz nach Anspruch 18, bei welchem die zweite Voltasche Zelle (32) ringförmig ist und die erste Voltasche Zelle (34) umgibt.

20. Ein elektrisches Tieflochstromnetz nach Anspruch 18 oder 19, bei welchem die erste Voltasche Zelle (34) ringförmig ist und den Fließdurchgang umgibt.

21. Ein elektrisches Tieflochstromnetz nach einem der vorhergehenden Ansprüche, welches weiter umfasst: ein inneres Gehäuse (24) mit einem Fließdurchgang (26), welcher durch dasselbe hindurch geformt ist, wobei das innere Gehäuse (24) mit der Rohranordnung (18) verbunden ist; so dass der Fließdurchgang (26) mit dem Innenraum der Rohranordnung (18) in Verbindung steht; und einem äußeren Gehäuse (28), welches mindestens zum Teil von dem inneren Gehäuse (24) getrennt angeordnet ist, so dass eine Kammer zwischen denselben geformt wird, in welcher die oder jede Voltasche Zelle (32, 34) positioniert ist.

## Revendications

1. Système d'alimentation électrique en fond de trou (10), comprenant un outil de forage consommateur d'électricité (14) interconnecté dans une colonne tubulaire (18) ; et une source d'alimentation (12) fournissant du courant électrique à l'outil de forage (14), la source d'alimentation (12) englobant au moins une cellule voltaïque (32, 34) possédant une anode (36) et une cathode (38), chacune de l'anode (36) et de la cathode (38) étant exposée à un électrolyte (40), et **caractérisé en ce que** l'électrolyte (40) est isolé du fluide de forage proche de la source d'alimentation (12) par au moins une barrière de fluide de transmission de pression (48, 50, 52, 54).

2. Système d'alimentation électrique en fond de trou selon la revendication 1, dans lequel l'électrolyte (40) est une solution saline.

3. Système d'alimentation électrique en fond de trou selon la revendication 1 ou 2, dans lequel la cathode (38) comprend un matériau qui est sélectionné parmi le cuivre et l'argent.

4. Système d'alimentation électrique en fond de trou selon l'une quelconque des revendications précédentes, dans lequel l'anode (36) comprend un matériau qui est sélectionné parmi l'aluminium, et un alliage de zinc et de magnésium.

5. Système d'alimentation électrique en fond de trou selon l'une quelconque des revendications précédentes, dans lequel la barrière ou chaque barrière est perméable au gaz.

6. Système d'alimentation électrique en fond de trou selon la revendication 5, dans lequel la barrière perméable au gaz est perméable au gaz hydrogène.

7. Système d'alimentation électrique en fond de trou selon l'une quelconque des revendications précédentes, dans lequel la barrière de fluide ou chaque barrière de perméabilité comprend du fluide (52) et un premier (54) et un second (48, 50) éléments de barrière entre lesquels ladite barrière de perméabilité (52) est disposée.

8. Système d'alimentation électrique en fond de trou selon la revendication 7, dans lequel le premier élément de barrière (54) isole le fluide de forage de ladite barrière de perméabilité (52), et le second élément de barrière (48, 50) isole l'électrolyte (40) de ladite barrière de perméabilité (52)

9. Système d'alimentation électrique en fond de trou selon la revendication 8, dans lequel le second élément de barrière (48, 50) est isolant électriquement.

10. Système d'alimentation électrique en fond de trou selon l'une quelconque des revendications 7 à 9, dans lequel le second élément de barrière (48, 50) permet un transfert de pression entre la barrière de perméabilité (52) et l'électrolyte (40).

11. Système d'alimentation électrique en fond de trou selon l'une quelconque des revendications 7 à 10, dans lequel le premier élément de barrière (54) permet un transfert de pression entre la barrière de perméabilité (52) et le fluide de forage.

12. Système d'alimentation électrique en fond de trou selon l'une quelconque des revendications 7 à 11, dans lequel le premier élément de barrière (54) comprend un piston flottant.

13. Système d'alimentation électrique en fond de trou selon l'une quelconque des revendications 7 à 12, dans lequel le second élément de barrière (48, 50) comprend un piston flottant.

14. Système d'alimentation électrique en fond de trou selon l'une quelconque des revendications 7 à 13, dans lequel la barrière de perméabilité (52) est isolante électriquement.

15. Système d'alimentation électrique en fond de trou selon l'une quelconque des revendications précédentes, dans lequel la barrière de perméabilité est mobile pour maintenir l'électrolyte (40) à une pression sensiblement égale à la pression de fluide de forage près du circuit d'alimentation.

16. Système d'alimentation électrique en fond de trou selon l'une quelconque des revendications précédentes, comprenant de multiples cellules voltaïques (32, 34), les cellules voltaïques étant connectées électriquement l'une à l'autre.

17. Système d'alimentation électrique en fond de trou selon la revendication 16, dans lequel les cellules voltaïques (32, 34) sont connectées en série.

18. Système d'alimentation électrique en fond de trou selon la revendication 16 ou 17, dans lequel une première (34) des cellules voltaïques est positionnée à l'intérieur d'une seconde (32) des cellules voltaïques.

19. Système d'alimentation électrique en fond de trou selon la revendication 18, dans lequel la seconde cellule voltaïque (32) est de forme annulaire et entoure la première cellule voltaïque (34).

20. Système d'alimentation électrique en fond de trou selon la revendication 18 ou 19, dans lequel la première cellule voltaïque (34) est de forme annulaire et entoure le passage d'écoulement.

21. Système d'alimentation électrique en fond de trou selon l'une quelconque des revendications précédentes, comprenant en outre : un logement interne (24) ayant un passage d'écoulement (26) formé à travers celui-ci, le logement interne (24) étant interconnecté avec la colonne tubulaire (18) ; de sorte que le passage d'écoulement (26) est en communication avec l'intérieur de la colonne tubulaire (18), et un logement externe (28) au moins partiellement espacé du logement interne (24) de sorte qu'une chambre est formée entre ceux-ci, dans laquelle est disposée la cellule ou chaque cellule voltaïque (32, 34).
